Europäisches Patentamt

European Patent Office

Office européen des brevets

(19)

(11) Veröffentlichungsnummer: **0 038 928**
**B1**

(12) ## EUROPÄISCHE PATENTSCHRIFT

(45) Veröffentlichungstag der Patentschrift: **28.12.83**

(51) Int. Cl.³: **B 62 D 53/08**

(21) Anmeldenummer: **81101904.1**

(22) Anmeldetag: **14.03.81**

(54) Sattelkupplung.

(30) Priorität: **26.03.80 CH 2386/80**

(43) Veröffentlichungstag der Anmeldung:
**04.11.81 Patentblatt 81/44**

(45) Bekanntmachung des Hinweises auf die Patenterteilung:
**28.12.83 Patentblatt 83/52**

(84) Benannte Vertragsstaaten:
**DE FR GB IT SE**

(56) Entgegenhaltungen:
CH - A - 536 731
FR - A - 1 261 071
GB - A - 722 786
US - A - 2 407 447
US - A - 3 035 855

(73) Patentinhaber: **GEORG FISCHER AKTIENGESELLSCHAFT Mühlentalstrasse 105 CH-8201 Schaffhausen (CH)**

(72) Erfinder: **Jakob, Lothar Schrotzburgstrasse 1 D-7712 Gottmadingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Sattelkupplung

Die Erfindung betrifft eine Sattelkupplung gemäss dem Oberbegriff des ersten Anspruches.

Eine derartige Kupplung ist in der CH—PS 536 731 beschrieben, wobei es sich um eine Sattelkupplung mit zwei Lagerböcken handelt, dessen kastenförmiger Kopf im Querschnitt annähernd rechteckig ist. Der Kopf passt derart in die Ausnehmung des Gummipolsters hinein, dass das horizontale Teilstück und die oberen Bereiche der vertikalen Wandung auch mit ihren Stirnseiten, an das Polster anliegen, so dass die Kupplungsplatte bezüglich der Lagerböcke allseitig gefedert ist.

Nachteilig ist, dass beim Abknicken d.h. Schwenken der Kupplungsplatte um eine quer zur Fahrtrichtung verlaufende Achse zwischen Zugmaschine und Auflieger das Gummipolster dauernd deformiert wird, was einen relativ grossen Verschleiss und eine schnelle Abnützung nach sich zieht. Eine Deformation tritt sogar bereits dann auf, wenn die Kupplungsplatte von der schrägen Einfahrstellung in die Horizontale gebracht wird. Ausserdem muss für die Deformation ein Kraftaufwand erbracht werden; dies kann bei leichten Aufliegern dazu führen, dass ein Kuppeln überhaupt nicht stattfinden kann.

Es ist Aufgabe der vorliegenden Erfindung, eine Sattelkupplung vorzuschlagen, die die obengenannten Nachteile nicht aufweist und mit einfachsten Mitteln herstellbar ist.

Diese Aufgabe wird erfindungsgemäss durch die Lehre des ersten Anspruches gelöst. Vorteilhafte Weiterbildungen gehen aus den abhängigen Ansprüchen hervor.

Nachfolgend werden Ausführungsformen der erfindungsgemässen Sattelkupplung anhand der Zeichnungen näher erläutert.

Es zeigen:

Fig. 1 einen Vertikalschnitt durch einen Lagerbock einer erfindungsgemässen Sattelkupplung,

Fig. 2 eine erste Variante zu Fig. 1, mit einer auf einer Schwinge montierten Kupplungsplatte,

Fig. 3 eine zweite Variante zu Fig. 1, mit abgeänderter Kupplungsplatte, und

Fig. 4 eine dritte Variante zu Fig. 1.

Für die Beschreibung des allgemeinen Aufbaus wird auf die bereits erwähnte CH—PS 536 731 verwiesen.

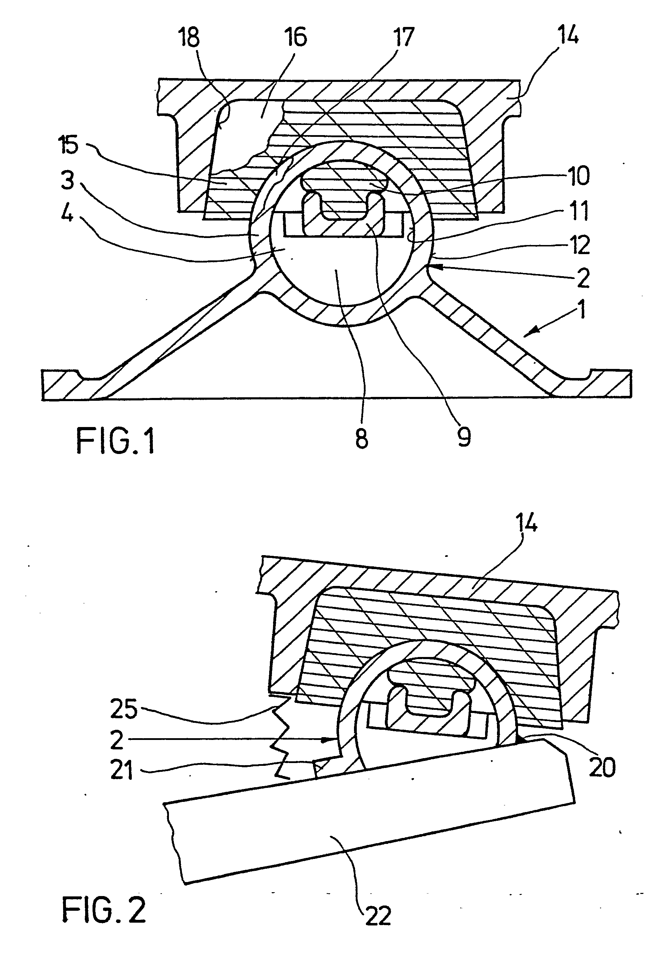

In Fig. 1 ist ein Lagerbock 1 mit einem kastenförmigen Kopf 2 gezeigt, wobei die Kopfwandung 3 durchgehend kreiszylinderförmig, und die Wanddicke 4 konstant ist. Der Kopf 2 hat zwei offene Enden 8, durch die ein Riegel 9 herausragt, der eine Gummileiste 10 gegen die Innenseite 11 der Wandung 3 drückt und horizontal sowie quer zur Fahrtrichtung angeordnet ist. Ausserhalb der Kopfenden 8 ist der Riegel 9 an der Kupplungsplatte 14 befestigt. An der Aussenseite 12 der Wandung 3 liegt ein Gummipolster 15 an, das in einer Tasche 16 an der Unterseite der Kupplungsplatte 14 liegt. Das Polster 15 hat eine nach unten offene Ausnehmung 17, in die der Kopf 2 eingepasst ist und derart tief hineinragt, dass er alle horizontalen Seitenkräfte aufnimmt.

Die Ausnehmung 17 ist teilkreis-zylinderförmig gestaltet. Bei Knickbewegungen zwischen Lagerbock und Zugmaschine einerseits und Kupplungsplatte und Auflieger andererseits, gleiten das Polster 15 und eine Leiste 10 gleichzeitig über die kreiszylinderförmige Aussenfläche 12 bzw. Innenfläche 11 der Wandung 3. Diese Konstruktion lässt eine grosse Bewegungsfreiheit zu, wobei alle Stellungen ohne Kraftaufwand möglich sind. Es muss nur die Reibung zwischen den Teilen 10, 15 und der Wandung 3 überwunden werden. Eine Deformation und Zerquetschung des Gummis durch Abknicken sind ausgeschlossen. Die Wanddicke 4 muss selbstverständlich nur in jenem Bereich kreiszylinderförmig sein, in dem die Leiste 10 relativ zum Polster 15 gleitet.

Vorteilhaft ist, dass durch die Form der Innenflächen 18 der Tasche 16 das Polster 15 bei vertikaler Druckbelastung verstärkt gegen die Aussenseite 12 gedrückt wird. Verglichen mit der bestehenden Ausführung ist die vorliegende Form ebenso einfach herzustellen.

In Fig. 2 ist die Wandung 3 des Kopfes 2 parallel zur Rohrachse getrennt und mittels Schweissnähten 20 oder Flanschen 21 an einer Schwinge 22 befestigt. Die Schwinge 22 ist um eine horizontale Achse quer zur Fahrtrichtung schwenkbar und dient zur Höhenverstellung der Kupplung.

Durch geeignete Massnahmen kann erreicht werden, dass die Kupplungsplatte 14 in unbelastetem Zustand in die durch eine Druckfeder 25 bewerkstelligte schräge Einfahrstellung gebracht wird. Fig. 2 zeigt eine Schrägstellung der Kupplungsplatte 14. Die gleiche Schrägstellung kann auch durch eine Zugfeder auf der anderen Seite des Kopfes (rechts in der Figur) erreicht werden. Diese Feder kann relativ schwach ausgebildet sein, weil nur die Reibung der Teile 10, 15 gegen die Wandung 3 überwunden werden muss.

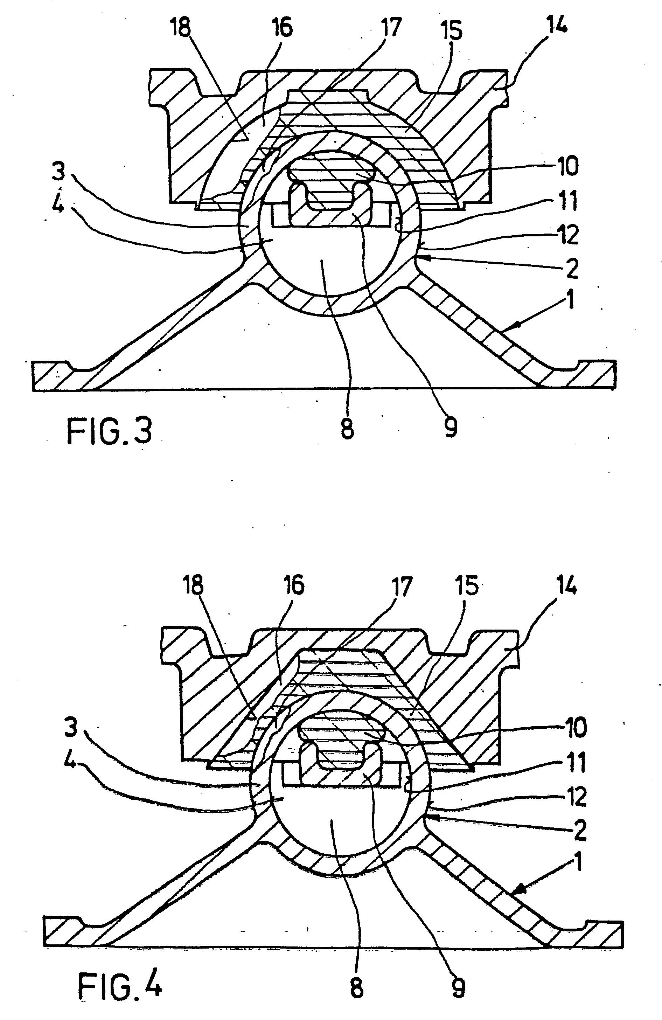

In den Figuren 3 und 4 sind weitere Ausführungsformen, der Kupplungsplatte 14 und des Gummipolsters 15 dargestellt, das in Fig. 3 in Querschnitt etwa teilkreisförmig verläuft. Dagegen verläuft die Innenfläche 18 in Fig. 4 ähnlich wie in Fig. 1, jedoch mit einem geringeren Winkel zur Horizontalebene.

Sowohl in Fig. 3 als auch in Fig. 4 ist die Form des Gummipolsters 15 derjenigen der Innenfläche 18 angepasst.

Obgleich die beschriebene Sattelkupplung zwei Lagerböcke aufweist, ist auch eine Ausführung mit nur einem Lagerbock denkbar.

## Patentansprüche

1. Sattelkupplung mit mindestens einem Lagerbock, mit einer Kupplungsplatte (14), die an ihrer Unterseite in einer Tasche (16) ein elastisches Polster (15) mit einer nach unten geöffneten Ausnehmung (17) aufweist, in welcher Ausnehmung der kastenförmig ausgebildete, an dessen Enden (8) offene Kopf (2) des Lagerbockes (1) anpassend hineinragt, und mit einem horizontal, quer zur Fahrtrichtung anzuordnenden, sich durch die offenen Kopfenden hindurch erstreckenden Riegel (9), der eine elastische Leiste (10) trägt und dessen Enden mit der Kupplungsplatte (14) fest verbunden sind, wobei die Leiste (10) und das Polster (15) beidseits der Kopfwandung (3) daran anliegen, dadurch gekennzeichnet, dass die Ausnehmung (17) teilkreiszylinderförmig ist, dass die Kopfwandung (3) einen teilkreiszylinderförmigen Bereich aufweist, über den die Leiste (10) und das Polster (15) gleitbar sind, und dass die Wanddicke (4) der Kopfwandung (3) in diesem Bereich konstant ist.

2. Sattelkupplung nach Anspruch 1, dadurch gekennzeichnet, dass die Wandung (3) umfangsmässig durchgehend ausgebildet ist (Fig. 1).

3. Sattelkupplung nach Anspruch 1, dadurch gekennzeichnet, dass der Lagerbock nur aus dem Kopf (2) besteht, und dass die Kopfwandung (3) nicht durchgehend ausgebildet ist (Fig. 2).

4. Sattelkupplung nach Anspruch 3, dadurch gekennzeichnet, dass der Kopf (2) auf einer, um eine horizontale Achse, quer zur Fahrtrichtung schwenkbaren Schwinge (22) montiert ist.

5. Sattelkupplung nach Anspruch 4, dadurch gekennzeichnet, dass der Kopf mittels einer Schweissnaht (20) auf der Schwinge montiert ist.

6. Sattelkupplung nach Anspruch 4, dadurch gekennzeichnet, dass der Kopf mittels eines Flansches (21) auf der Schwinge montiert ist.

7. Sattelkupplung nach einem der Ansprüche 1 bis 6, dadurch gekennzeichnet, dass mittels einer Feder (25) die unbelastete Kupplungsplatte in die Einfahrstellung bringbar ist (Fig. 2).

## Revendications

1. Attelage à sellette comportant au moins un bloc-palier, une plaque d'attelage (14) qui présente sur sa face inférieure, dans une poche (16), un tampon élastique (15) muni d'un évidement (17) ouvert vers le bas, dans lequel évidement la tête (2) du bloc-palier (1), en forme de boîte, ouverte à ses extrémités (8), est engagée de façon ajustée, et un verrou (9), destiné à être disposé horizontalement, transversalement à la direction de la marche, qui s'étend à travers les extrémités ouvertes de la tête, qui porte une barrette élastique (10) et dont les extrémités sont reliées rigidement à la plaque d'attelage (14), la barrette (10) et le tampon (15) étant appuyés contre la paroi (3) de la tête, respectivement sur les deux faces de celle-ci, caractérisé en ce que l'évidement (17) est d'une forme cylindrique à base en partie de cercle, la paroi (3) de la tête présente une région de forme cylindrique à base en partie de cercle, sur laquelle la barrette (10) et le tampon (15) peuvent glisser, et en ce que l'épaisseur de paroi (4) de la paroi (3) de la tête est constante dans cette région.

2. Attelage à sellette selon la revendication 1, caractérisé en ce que la paroi (3) est continue sur sa périphérie (Fig. 1).

3. Attelage à sellette selon la revendication 1, caractérisé en ce que le bloc-palier est uniquement composé de la tête (2) et en ce que la paroi (3) de la tête est réalisée sous une forme non continue (Fig. 2).

4. Attelage à sellette selon la revendication 3, caractérisé en ce que la tête (2) est montée sur un élément oscillant (22) qui peut osciller autour d'un axe horizontal, transversalement à la direction de la marche.

5. Attelage à sellette selon la revendication 4, caractérisé en ce que la tête est montée sur l'élément oscillant au moyen d'un joint soudé (20).

6. Attelage à sellette selon la revendication 4, caractérisé en ce que la tête est montée sur l'élément oscillant au moyen d'une bride (21).

7. Attelage à sellette selon l'une quelconque des revendications 1 à 6, caractérisé en ce que la plaque d'attelage non chargée peut être mise en position d'engagement au moyen d'un ressort (25) (Fig. 2).

## Claims

1. Saddle coupling with at least one bearing block, having a coupling plate (14) which has in a pocket (16) on its lower side a flexible cushioning (15) with a downwardly opening recess (17), into which recess the box-shaped head (2) of the bearing block (1), open at its ends (8), projects to fit, and with a bar (9) extending through the open head ends and which is to be arranged horizontally, transversely to the direction to travel, which bar (9) carries flexible strip (10) and whose ends are rigidly connected to the coupling plate (14), whereby the strip (10) and the cushioning (15) abut on both sides of the head wall (3), characterised in that the recess (17) is a part circular cylinder, in that the head wall (3) has a part circular cylindrical shaped area, over which the strip (10) and the cushioning (15) can be slid, and in that the wall thickness (4) of the head wall (3) in this area is constant.

2. Saddle coupling according to claim 1, characterised in that the wall (3) is designed to be continuous over its periphery (Fig. 1).

3. Saddle coupling according to claim 1, characterised in that the bearing block consists only of the head (2), and in that the head wall (3) is not continuous (Fig. 2).

4. Saddle coupling according to claim 3, characterised in that the head (2) is mounted on a rocker arm (22) pivotable about a horizontal axis transversely to the direction of travel.

5. Saddle coupling according to claim 4, characterised in that the head is mounted on the rocker arm by means of a welded joint (20).

6. Saddle coupling according to claim 4, characterised in that the head is mounted on the rocker arm by means of a flange (21).

7. Saddle coupling according to one of claims 1 to 6, characterised in that the unloaded coupling plate can be brought into the run-in position by means of a spring (25) (Fig. 2).

FIG.1

FIG.2

FIG.3

FIG.4

2